# EUROPEAN PATENT APPLICATION

(11) **EP 2 813 925 A2**
(43) Date of publication of application: **17.12.2014**
(21) Application number: 14168424.1
(22) Date of filing: 15.05.2014
(51) Int. Cl.: G06F 3/041

(54) **Mobile terminal apparatus, function controlling method, and computer-readable recording medium**

(30) Priority: 14.06.2013 JP 2013125949
(71) Applicant: FUJITSU LIMITED, Kawasaki-shi, Kanagawa 211-8588 (JP)
(72) Inventor: Ikeda, Makoto, Kato-shi, Hyogo 673-1447 (JP)
(74) Representative: Schultes, Stephan

(57) **Abstract**

A mobile terminal apparatus (100) according to an embodiment stops a touch sensitive panel (120) and a display device 140 in a super power saving mode and detects a predetermined touch operation by using a piezoelectric film (130) in a state where the piezoelectric film is activated. The mobile terminal apparatus (100) compares the detected predetermined touch operation with a first table stored in a storage unit (180) to execute a function corresponding to the touch operation.

## Description

### FIELD

An embodiment discussed herein is directed to a mobile terminal apparatus and the likes.

### BACKGROUND

Conventionally, a mobile terminal apparatus including a touch sensitive panel makes the touch sensitive panel function in a state of displaying an image on a screen to accept a touch operation by a user and executes a function corresponding to the touch operation. The mobile terminal apparatus shifts to a sleep condition since a large amount of electricity is consumed when the screen and the touch sensitive panel are kept activated at all times.

Here, when the mobile terminal apparatus is in a sleep condition, a user is not able to operate the mobile terminal apparatus by using the touch sensitive panel. For example, when operating the mobile terminal apparatus in the sleep condition, the user depresses a power button of the mobile terminal apparatus. The mobile terminal apparatus whose power button is depressed activates the screen and the touch sensitive panel and accepts a touch operation by the user. More detailed information of conventional techniques can be obtained in Japanese Laid-open Patent Publication No. 2011-124890 and US 2011/0143815.

However, there is a problem of not being able to improve operability while reducing power consumption in the conventional techniques above.

When having shifted to the sleep condition, for example, the conventional mobile terminal apparatus is not operable until the sleep condition of the mobile terminal apparatus is cancelled and the touch sensitive panel is activated even when the user wants to operate the mobile terminal apparatus at once. While the mobile terminal apparatus becomes operable promptly by the user when the screen and the touch sensitive panel of the mobile terminal apparatus are kept in an activated condition at all times, it is not possible in this situation to reduce power consumption of the mobile terminal apparatus.

Accordingly, it is an object in one aspect of an embodiment of the invention to provide a mobile terminal apparatus capable of improving operability while reducing power consumption, a function controlling method, a computer-readable recording medium storing thereon a function controlling program.

### SUMMARY

According to an aspect of an embodiment of the invention, a mobile terminal apparatus includes: a piezoelectric film that is arranged between a touch sensitive panel and a screen and detects a predetermined touch operation; a storage unit that stores information in which the predetermined touch operation and a predetermined function are associated; and a control unit that executes the function corresponding to the predetermined touch operation based on the information stored in the storage unit when the piezoelectric film accepts the predetermined touch operation in a state where the touch sensitive panel and the screen are not in operation.

### BRIEF DESCRIPTION OF DRAWINGS

FIG. 1 illustrates a configuration of a mobile terminal apparatus according to an embodiment;
FIG. 2 is an explanatory view of an input/output unit;
FIG. 3 is another explanatory view of an input/output unit;
FIG. 4 illustrates an example of a screen of the input/output unit of the mobile terminal apparatus;
FIG. 5 illustrates an example of a data structure of a first table;
FIG. 6 illustrates an example of a data structure of a second table;
FIG. 7 is a flowchart of a processing procedure of the mobile terminal apparatus in a super power saving mode; and
FIG. 8 is a flowchart of a processing procedure of the mobile terminal apparatus in a power saving mode.

### DESCRIPTION OF EMBODIMENT(S)

Preferred embodiments of the present invention will be explained with reference to accompanying drawings. The present invention is not limited to the embodiment.

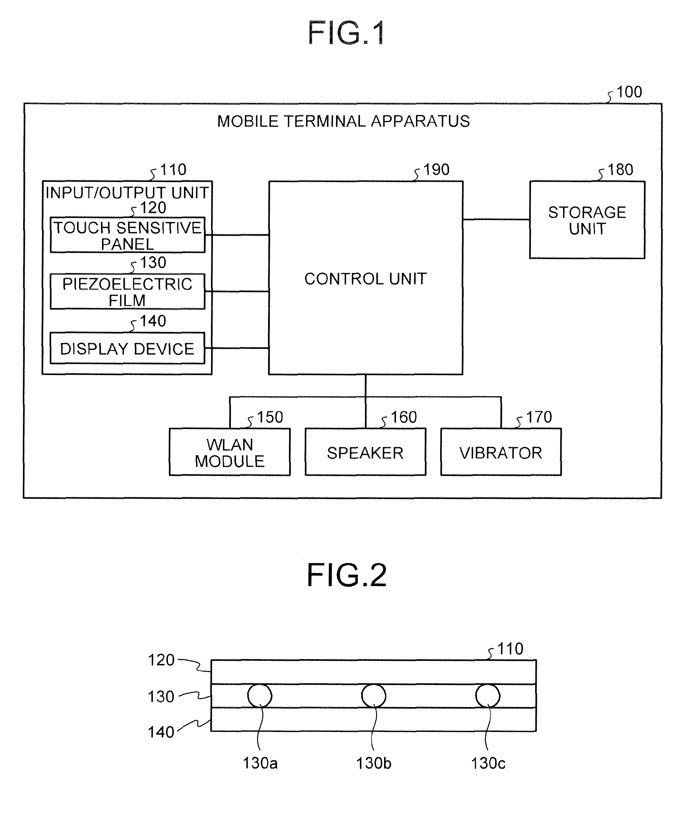

A mobile terminal apparatus according to an embodiment will be explained. FIG. 1 illustrates a configuration of a mobile terminal apparatus according to the embodiment. As illustrated in FIG. 1, a mobile terminal apparatus 100 is provided with an input/output unit 110, a wireless local area network (WLAN) module 150, a speaker 160, a vibrator 170, a storage unit 180, and a control unit 190. The input/output unit 110 is provided with a touch sensitive panel 120, a piezoelectric film 130, and a display device 140.

FIG. 2 is an explanatory view of an input/output unit. As illustrated in FIG. 2, the touch sensitive panel 120, the piezoelectric film 130, and the display device 140 overlap with each other in the input/output unit 110. The piezoelectric film 130 includes piezoelectric elements 130a, 130b, and 130c. When the touch sensitive panel 120 is depressed, the piezoelectric elements 130a to 130c of the piezoelectric film 130 deform and generate respective power voltages depending on respective deformation amounts.

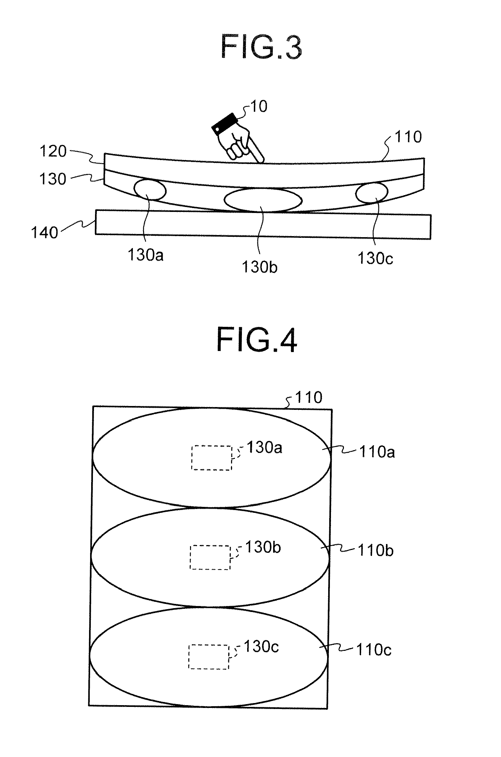

FIG. 3 is another explanatory view of an input/output unit. As illustrated in FIG. 3, for example, when a midmost of the touch sensitive panel 120 is depressed by a hand 10 of the user, the piezoelectric element 130b deforms and an amount of power voltage output from the piezoelectric element 130b becomes equal to or more than a threshold value. In contrast to this, the power voltages generated from the piezoelectric elements 130a and 130c are smaller than the power voltage generated from the piezoelectric element 130b. It is therefore possible by using respective power voltages generated from the piezoelectric elements 130a to 130c to determine a rough position which is depressed by the user.

FIG. 4 illustrates an example of a screen of the input/output unit of the mobile terminal apparatus. As one example here, an area of the input/output unit 110 is divided into an upper side area 110a, a midmost area 110b, and a lower side area 110c. For example, the piezoelectric element 130a is arranged under the upper side area 110a. The piezoelectric element 130b is arranged under the midmost area 110b. The piezoelectric element 130c is arranged under the lower side area 110c.

For example, when the amount of the power voltage output from the piezoelectric element 130a is equal to or more than the threshold value, the upper side area 110a is assumed to be depressed. When the amount of the power voltage output from the piezoelectric element 130b is equal to or more than the threshold value, the midmost area 110b is assumed to be depressed. When the amount of the power voltage output from the piezoelectric element 130c is equal to or more than the threshold value, the lower side area 110c is assumed to be depressed.

The explanation goes back to FIG. 1. The WLAN module 150 is a device that provides a tethering function. The WLAN module 150 starts tethering in accordance with a control instruction from the control unit 190. When starting the tethering, the WLAN module 150 is connected to an external device via a wireless LAN and allows a connection between the external device and a network such as the Internet.

The speaker 160 is a device that outputs sound in accordance with a control instruction from the control unit 190. The vibrator 170 is a device that vibrates in accordance with a control instruction from the control unit 190.

The storage unit 180 is a device that stores a first table and a second table. The storage unit 180, for example, corresponds to a storage device like a semiconductor element such as a random access memory (RAM), a read only memory (ROM), and a flash memory.

The first table is used when the mobile terminal apparatus 100 shifts to a "super power saving mode". The "super power saving mode" will be explained later. The first table includes information in which a position which is depressed by the user on the screen is associated with a functional operation executed by the control unit 190.

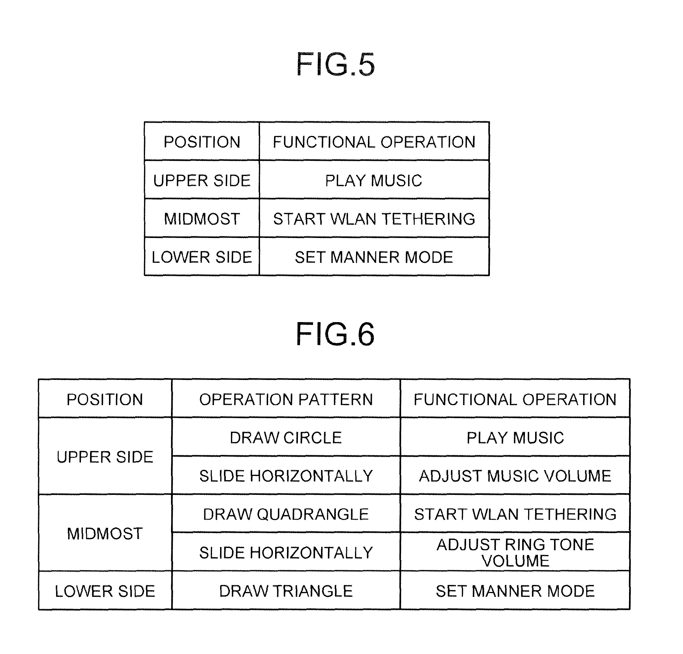

FIG. 5 illustrates an example of a data structure of the first table. As illustrated in FIG. 5, a position and a functional operation are associated in the first table. The position identifies a position which is depressed by the user on the screen. For example, the position includes an upper side, a midmost, and a lower side. The upper side of the first table corresponds to the upper side area 110a illustrated in FIG. 4. The midmost of the first table corresponds to the midmost area 110b illustrated in FIG. 4. The lower side of the first table corresponds to the lower side area 110c illustrated in FIG. 4. The functional operation corresponds to a functional operation to be executed by the control unit 190.

The second table is used when the mobile terminal apparatus 100 shifts to a "power saving mode". The "power saving mode" will be explained later. The second table includes information in which a position of an operation, an operation pattern, and a functional operation are associated with each other when the user performs a touch operation.

FIG. 6 illustrates an example of a data structure of the second table. As illustrated in FIG. 6, a position, an operation pattern, and a functional operation are associated in the second table. The position identifies a position which is operated by the user on the screen. The same as the explanation for the position of the first table applies for the position here. The operation pattern indicates an operation kind performed by the user with respect to the touch sensitive panel 120. The functional operation corresponds to a function to be executed by the control unit 190.

The explanation goes back to FIG. 1. The control unit 190 causes the mobile terminal apparatus 100 to be in any one of conditions, the "super power saving mode", the "power saving mode", and a "normal mode". Based on the condition of the mobile terminal apparatus 100 and a touch operation onto the input/output unit 110, the control unit 190 executes a function corresponding to the touch operation.

A processing of the control unit 190, when the mobile terminal apparatus 100 is in each of the super power saving mode, the power saving mode, and the normal mode, will be explained in turn below. Here, the control unit 190 corresponds to an integrated device such as an application specific integrated circuit (ASIC) and a field programmable gate array (FPGA), for example. The control unit 190 corresponds to an electronic circuit such as a central processing unit (CPU) and a micro processing unit (MPU), for example.

A processing of the control unit 190 in the case of the "super power saving mode" will be explained. For example, when there is no touch operation onto the input/output unit 110 for not less than a predetermined period of time, the control unit 190 causes the mobile terminal apparatus 100 to shift to the condition of the super power saving mode. In the super power saving mode, the control unit 190 causes the piezoelectric film 130 to be in an activated condition and stops the touch sensitive panel 120 and the display device 140. Besides, a device which is to be stopped in the super power saving mode may be arbitrarily set by an administrator.

The control unit 190 uses the piezoelectric film 130 and detects a touch operation by the user in the case of the super power saving mode. The control unit 190 compares a content of the detected touch operation with the first table to execute a function corresponding to the touch operation.

Here, the control unit 190 detects power voltage amounts generated from the piezoelectric elements 130a to 130c of the piezoelectric film 130 and determines the touch operation based on the detected power voltage amounts. The control unit 190 classifies the touch operation in the super power saving mode into any one of "upper side is depressed", "midmost is depressed", and "lower side is depressed" for determination.

Specifically, the control unit 190 determines that "upper side is depressed" when the power voltage amount generated from the piezoelectric element 130a is equal to or more than the threshold value. The control unit 190 determines that "midmost is depressed" when the power voltage amount generated from the piezoelectric element 130b is equal to or more than the threshold value. The control unit 190 determines that "lower side is depressed" when the power voltage amount generated from the piezoelectric element 130c is equal to or more than the threshold value.

The control unit 190 compares the determined touch operation with the first table, determines a functional operation, and executes the determined function. For example, an explanation will be made by using the first table in FIG. 5. The control unit 190 executes a function of "play music" when the touch operation is "upper side is depressed". For example, the control unit 190 reads out music data stored in the storage unit 180 and outputs music from the speaker 160 in executing the "play music" function.

The control unit 190 executes a function of "start WLAN tethering" when the touch operation is "midmost is depressed". For example, the control unit 190 outputs a control instruction to the WLAN module 150 to start tethering in executing the "start WLAN tethering" function.

The control unit 190 executes a function of "set manner mode" when the touch operation is "lower side is depressed". For example, the control unit 190 operates the vibrator 170 instead of outputting a ring tone from the speaker 160 when the mobile terminal apparatus 100 receives an incoming call in executing the "set manner mode" function.

By the way, the control unit 190 is configured to execute functions in the "super power saving mode" when any one of the upper side area, the midmost area, and the lower side area on the screen of the input/output unit 110 is depressed twice consecutively within a predetermined period of time. This processing executed by the control unit 190 enables preventing a false operation.

A processing of the control unit 190 in the case of the "power saving mode" will be explained. For example, the control unit 190 shifts the condition of the mobile terminal apparatus 100 from the super power saving mode to the power saving mode when accepting a predetermined touch operation in the case where the condition of the mobile terminal apparatus 100 is the super power saving mode. The control unit 190 shifts the condition to the power saving mode when any two of the upper side area 110a, the midmost area 110b, and the lower side area 110c on the screen of the input/output unit 110 are depressed at the same time.

In the power saving mode, the control unit 190 causes the touch sensitive panel 120 and the piezoelectric film 130 to be activated and stops the display device 140. Here, while being in the activated condition, the touch sensitive panel 120 in the power saving mode performs a processing by reducing scanning frequency per unit time. Therefore, it becomes possible that the touch sensitive panel 120 in the power saving mode is able to detect only an area in which the touch operation is accepted and a rough track of the touch operation.

The control unit 190 uses the touch sensitive panel 120 to specify the position where the user touched and the operation pattern in the case of the power saving mode. The control unit 190 compares the specified position and the operation pattern with the second table and executes a function corresponding to the position and the operation pattern.

The control unit 190 compares coordinates of a range of the upper side area 110a, coordinates of a range of the midmost area 110b, coordinates of a range of the lower side area 110c, and coordinates which are output from the touch sensitive panel and where the touch operation is accepted to determine the position where the user touched. The control unit 190 determines what among the "upper side", the "midmost", and the "lower side" the touched position is. Information of the coordinates of the range of the upper side area 110a, the coordinates of the range of the midmost area 110b, and the coordinates of the range of the lower side area 110c is assumed to be stored in the storage unit 180.

The control unit 190 determines an operation pattern based on the track of the coordinates which are output from the touch sensitive panel 120 and where the touch operation is accepted. For example, the control unit 190 may use an operation pattern determination table in which a travel track and an operation pattern are associated to determine an operation pattern. The control unit 190 classifies the operation pattern into any one of "slide horizontally", "draw circle", "draw triangle", and "draw quadrangle".

The control unit 190 compares the position of the touch operation and the operation pattern with the second table, determines a functional operation, and executes the determined function. An explanation will be made by using the table in FIG. 6. The control unit 190 executes the function of "play music" when the position of the touch operation is "upper side" and the operation pattern is "draw circle".

The control unit 190 executes a function of "adjust music volume" when the position of the touch operation is "upper side" and the operation pattern is "slide horizontally". For example, the control unit 190 turns up music volume by a predetermined degree when slide is performed rightward and turns down music volume by a predetermined degree when slide is performed leftward.

The control unit 190 executes the function of "start WLAN tethering" when the position of the touch operation is "midmost" and the operation pattern is "draw quadrangle".

The control unit 190 executes a function of "adjust ring tone volume" when the position of the touch operation is "midmost" and the operation pattern is "slide horizontally". For example, the control unit 190 turns up ring tone volume by a predetermined degree when slide is performed rightward and turns down ring tone volume by a predetermined degree when slide is performed leftward.

The control unit 190 executes the function of "set manner mode" when the opposition of the touch operation is "lower side" and the operation pattern is "draw triangle".

A processing of the control unit 190 in the "normal mode" will be explained. In this normal mode, the control unit 190 causes the touch sensitive panel 120 and the display device 140 to be activated and executes the same processing as a known mobile terminal apparatus.

Next, a processing procedure of the mobile terminal apparatus 100 according to the embodiment will be explained.

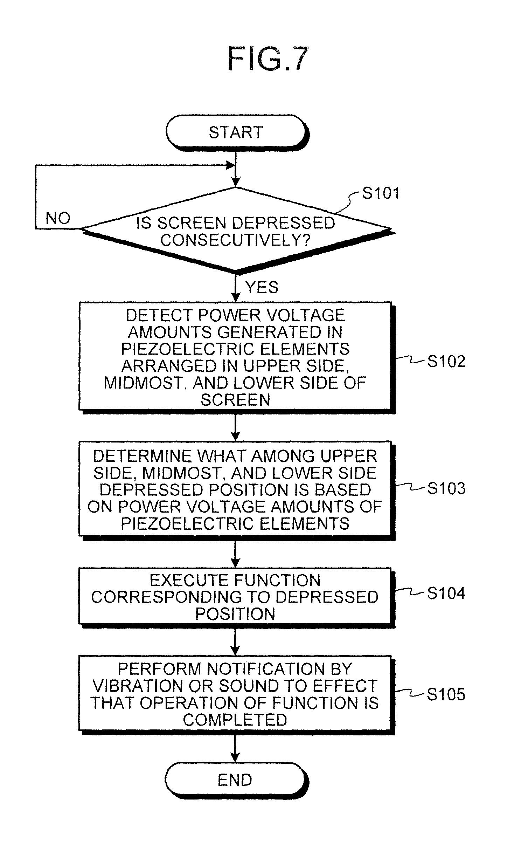

FIG. 7 is a flowchart of a processing procedure of the mobile terminal apparatus in the super power saving mode. As illustrated in FIG. 7, the mobile terminal apparatus 100 determines whether or not the screen is depressed consecutively (step S101). The mobile terminal apparatus 100 goes again to step S101 when the screen is not depressed consecutively ("No" at step S101).

The mobile terminal apparatus 100 detects power voltage amounts generated in the piezoelectric elements 130a to 130c respectively arranged in the upper side, the midmost, and the lower side of the screen (step S102) when the screen is depressed consecutively ("Yes" at step S101). The mobile terminal apparatus 100 determines what among the "upper side", the "midmost", and the "lower side" the depressed position is based on the power voltage amounts of the piezoelectric elements 130a to 130c (step S103).

The mobile terminal apparatus 100 executes a function corresponding to the depressed position (step S104). For example, the mobile terminal apparatus 100 plays music when the "upper side" is depressed at step S104. The mobile terminal apparatus 100 starts WLAN tethering when the "midmost" is depressed. The mobile terminal apparatus 100 sets manner mode when the "lower side" is depressed.

The mobile terminal apparatus 100 performs, by a vibration or a sound, a notification to the effect that the operation of the function is completed (step S105).

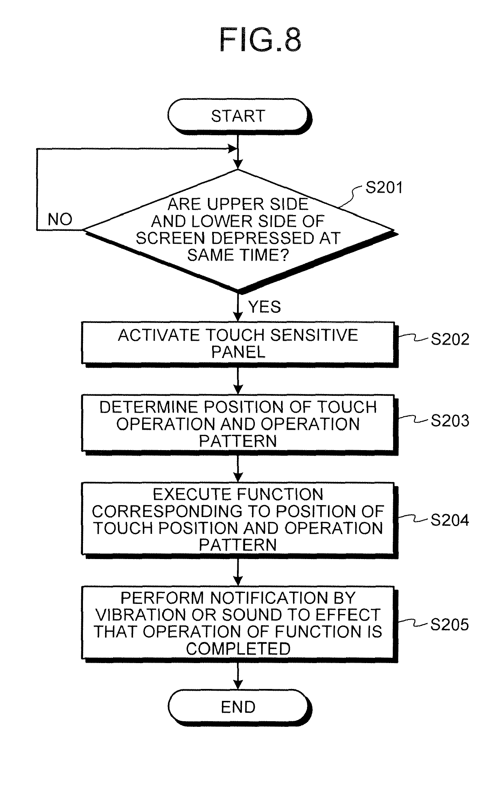

FIG. 8 is a flowchart of a processing procedure of the mobile terminal apparatus in the power saving mode. As illustrated in FIG. 8, the mobile terminal apparatus 100 determines whether or not the upper side and the lower side of the screen are depressed at the same time (step S201). The mobile terminal apparatus 100 goes again to step S201 when the upper side and the lower side of the screen are not depressed at the same time ("No" at step S201).

On the other hand, when the upper side and the lower side of the screen are depressed at the same time ("Yes" at step S201), the mobile terminal apparatus 100 activates the touch sensitive panel 120 (step S202). The mobile terminal apparatus 100 determines the position of the touch operation and the operation pattern (step S203).

The mobile terminal apparatus 100 executes a function corresponding to the position of the touch operation and the operation pattern (step S204). The mobile terminal apparatus 100 performs a notification to the effect that the operation of the function is completed by a vibration or a sound (step S205). For example, the mobile terminal apparatus 100 plays music when the position of the touch operation is "upper side" and the operation pattern is "draw circle" at step S204. The mobile terminal apparatus 100 adjusts music volume when the position of the touch operation is "upper side" and the operation pattern is "slide horizontally". The mobile terminal apparatus 100 starts the WLAN tethering when the position of the touch operation is "midmost" and the operation pattern is "draw quadrangle". The mobile terminal apparatus 100 adjusts ring tone volume when the position of the touch operation is "midmost" and the operation pattern is "slide horizontally". The mobile terminal apparatus 100 sets manner mode when the position of the touch operation is "lower side" and the operation pattern is "draw triangle".

Next, advantages of the mobile terminal apparatus 100 according to the embodiment will be explained. The mobile terminal apparatus 100 stops the touch sensitive panel 120 and the display device 140 and detects, in the state where the piezoelectric film 130 is activated, a predetermined touch operation by using the piezoelectric film 130. The mobile terminal apparatus 100 compares the detected predetermined touch operation with the first table stored in the storage unit 180 and executes a function corresponding to the touch operation. Since a predetermined function can be executed even though the touch sensitive panel 120 and the display device 140 are not activated, it is possible in the mobile terminal apparatus 100 to improve operability while reducing power consumption.

The mobile terminal apparatus 100 according to the embodiment changes the condition to the power saving mode when a predetermined touch operation is accepted while the condition is the super power saving mode. The mobile terminal apparatus 100 activates the touch sensitive panel 120 and compares the position of the touch operation onto the touch sensitive panel 120 and the operation pattern with the second table and executes a corresponding function. Therefore, it is possible to suppress power consumption and provide more functions than the super power saving mode.

The mobile terminal apparatus 100 according to the embodiment reduces the scanning frequency of the touch sensitive panel 120 per unit time and determines an operation pattern based on information obtained from the touch sensitive panel 120. Therefore, it is possible to reduce as much power consumption as possible of the touch sensitive panel 120 even though the touch sensitive panel 120 is activated and to provide more functions.

By the way, the mobile terminal apparatus 100 is able to execute the same processing as the above-described embodiment by executing a program stored in the storage unit 180 and the like. For example, the mobile terminal apparatus 100 runs a function controlling process by executing a function controlling program stored in the storage unit 180. This function controlling process realizes the function of the control unit 190.

Here, the function controlling program may not necessarily be stored in the storage unit 180 from the beginning. For example, programs may be stored in a "portable physical medium" such as a flexible disk (FD), a CD-ROM, a DVD disk, an optical magnetic disk, and an IC card which are inserted to the mobile terminal apparatus 100. The mobile terminal apparatus 100 then may read out from the portable physical medium and execute the function controlling program.

According to the embodiment of the present invention, it is possible to improve operability while reducing power consumption.

## Claims

1. A mobile terminal apparatus, comprising:
a piezoelectric film (130) that is arranged between a touch sensitive panel (120) and a screen (140) and detects a predetermined touch operation;
a storage unit (180) that stores information in which the predetermined touch operation and a predetermined function are associated; and
a control unit (190) that executes the function corresponding to the predetermined touch operation based on the information stored in the storage unit (180) when the piezoelectric film (130) accepts the predetermined touch operation in a state where the touch sensitive panel (120) and the screen (140) are not in operation.

2. The mobile terminal apparatus according to claim 1, wherein
the storage unit (180) stores a table in which a predetermined touch operation to be detected by the touch sensitive panel (120) and a predetermined function are associated, and
the control unit (190) activates the touch sensitive panel (120) when the piezoelectric film (130) detects a touch operation which has a different feature from the predetermined touch operation and executes the function corresponding to the predetermined touch operation based on the table stored in the storage unit (180) when the touch sensitive panel (120) accepts the predetermined touch operation.

3. The mobile terminal apparatus according to claim 2, wherein the control unit (190) reduces a scanning frequency of the touch sensitive panel (120) per unit time and determines a kind of a touch operation with respect to the touch sensitive panel based on information obtained from the touch sensitive panel (120).

4. A function controlling method to be executed by a computer, comprising:
referring to a storage unit (180) that stores information in which a predetermined touch operation and a predetermined function are associated when a piezoelectric film (130) arranged between a touch sensitive panel (120) and a screen (140) accepts a predetermined touch operation in a state where the touch sensitive panel (120) and the screen (140) are not in operation, and
executing the function corresponding to the predetermined touch operation based on the information stored in the storage unit (180).

5. The function controlling method according to claim 4, wherein
the storage unit (180) stores a table in which a predetermined touch operation to be detected by the touch sensitive panel (120) and a predetermined function are associated, and
the executing activates the touch sensitive panel (120) when the piezoelectric film (130) detects a touch operation which has a different feature from the predetermined touch operation and executes the function corresponding to the predetermined touch operation based on the table stored in the storage unit (180) when the touch sensitive panel (120) accepts the predetermined touch operation.

6. The function controlling method according to claim 5, wherein the executing reduces a scanning frequency of the touch sensitive panel (120) per unit time and determines a kind of a touch operation with respect to the touch sensitive panel (120) based on information obtained from the touch sensitive panel (120).

7. A program for causing a computer to execute a function controlling process comprising:
referring to a storage unit (180) that stores information in which a predetermined touch operation and a predetermined function are associated when a piezoelectric film (130) arranged between a touch sensitive panel (120) and a screen (140) accepts a predetermined touch operation in a state where the touch sensitive panel and the screen are not in operation, and
executing the function corresponding to the predetermined touch operation based on the information stored in the storage unit (180).

8. The program according to claim 7, wherein
the storage unit (180) stores a table in which a predetermined touch operation to be detected by the touch sensitive panel (120) and a predetermined function are associated, and
the executing activates the touch sensitive panel (120) when the piezoelectric film (130) detects a touch operation which has a different feature from the predetermined touch operation and executes the function corresponding to the predetermined touch operation based on the table stored in the storage unit (180) when the touch sensitive panel (120) accepts the predetermined touch operation.

9. The program according to claim 8, wherein the executing reduces a scanning frequency of the touch sensitive panel (120) per unit time and determines a kind of a touch operation with respect to the touch sensitive panel (120) based on information obtained from the touch sensitive panel (120).
